# EUROPEAN PATENT SPECIFICATION

(11) **EP 2 200 151 B1**
(45) Date of publication and mention of the grant of the patent: **17.08.2011**
(21) Application number: 08172417.1
(22) Date of filing: 19.12.2008
(51) Int. Cl.: H02J 7/35

(54) **A photovoltaic system**
Photovoltaiksystem
Système photovoltaïque

(43) Date of publication of application: 23.06.2010
(73) Proprietor: ABB Research Ltd., 8050 Zürich (CH)
(72) Inventor: Papastergiou, Konstantinos, 722 16, Västerås (SE)
(74) Representative: Kock, Ina

(56) References cited:
- DE-A1- 2 646 715
- DE-A1- 4 204 237
- FR-A- 2 335 081
- US-A- 6 034 506
- US-A1- 2008 211 451

## Description

### Technical field of the Invention

The present invention relates generally to the field of photovoltaic systems. The use of photovoltaic systems to generate power is increasingly establishing itself around the globe. Photovoltaic systems, also known as solar panel systems, are easy to install, do not cost much to operate and can be used practically anywhere where sunlight is available. The various possibilities range from small fixed systems for home use right through to large solar parks with mobile solar modules that follow the position of the sun. The present invention relates specifically to the field of large solar parks.

The photovoltaic system comprises at least one photovoltaic unit comprising two photovoltaic sources, each comprising an input terminal and an output terminal, the photovoltaic system being arranged to generate an output voltage which is essentially uninfluenced by variable irradiation/weather, i.e. clouds shading the photovoltaic source.

### Background of the Invention

A photovoltaic source, such as a photovoltaic module comprising several photovoltaic cells, or a plurality of photovoltaic modules, needs for optimal operation unaffected irradiation from the sun, and the output voltage is dependent directly on the degree of the instantaneous irradiation. Thus, when a cloud is shading the photovoltaic source the output voltage of the photovoltaic system is decreased. The direct correlation between the instantaneous irradiation and the output voltage is a major issue in locations having a varying degree of irradiation.

The power mains, to which a photovoltaic source is arranged to feed electricity, requires alternating current at a specific voltage level. In order to fulfill these requirements a DC/AC converter is arranged between the photovoltaic source and the power mains, which converter must be arranged to operate at a as wide input voltage range as possible in order to manage a varying output voltage from the photovoltaic source. A converter managing a wide input voltage range is proportionately expensive as it usually is comprised of more than one stage. A conventional way of managing a greatly varying input voltage is to use a boost DC/DC converter to provide a reasonable input voltage to said DC/AC converter. The use of a boost DC/DC converter at this stage reduces the efficiency of the photovoltaic system.

### Object of the Invention

The present invention aims at obviating the aforementioned disadvantages of previously known photovoltaic systems, and at providing an improved photovoltaic system. A primary object of the present invention is to provide an improved photovoltaic system of the initially defined type which is arranged to generate an output voltage which is essentially uninfluenced by varying irradiation, i.e. a cloud shading the photovoltaic source, or if a specific photovoltaic source is malfunctioning.

It is another object of the present invention to provide a photovoltaic system, which adds voltage to the output voltage of the photovoltaic source when the latter is below a predetermined threshold value. It is another object of the present invention to provide a photovoltaic system, which may store any surplus of the output voltage in order to be self supporting with regards to the occasional need of added voltage. It is still another object of the present invention to provide a photovoltaic system capable of delivering an output power day and night. It is still another object of the present invention to provide photovoltaic system, which has a reconfigurable architecture such that the output voltage of the photovoltaic system is adjustable based on different modes of operation. It is another object of the present invention to provide a photovoltaic system, which is arranged to generate an output power which is essentially uninfluenced by varying irradiation.

### Summary of the Invention

According to the invention at least the primary object is attained by means of the initially defined photovoltaic system having the features defined in the independent claim. Preferred embodiments of the present invention are further defined in the dependent claims.

According to the present invention, there is provided a photovoltaic system of the initially defined type, wherein the photovoltaic unit comprises two voltage adding arrangements, each negative comprising a first negative input terminal and an positive output terminal, and in that a first route comprising a voltage source and a second route constituting a voltage source bypass extend between said first input terminal and said output terminal of each voltage adding arrangement, said first and second routes being separately activateable, the first input terminal of the first voltage adding arrangement being connected to a first input terminal of the photovoltaic unit, and the output terminal of the first voltage adding arrangement being connected to the input terminal of the first photovoltaic source, and the output terminal of the first photovoltaic source being connected to a first output terminal of the photovoltaic unit, the input terminal of the second photovoltaic source being connected to a second input terminal of the photovoltaic unit, and the output terminal of the second photovoltaic source being connected to the first input terminal of the second voltage adding arrangement, and the output terminal of the second voltage adding arrangement being connected to a second output terminal of the photovoltaic unit, and a switch is arranged between the input terminal of the first photovoltaic source and the output terminal of the second photovoltaic source, and in addition the input terminals of the photovoltaic unit constituting the external interface of the photovoltaic system are interconnected and the output terminals of the photovoltaic unit constituting the external interface of the photovoltaic system are interconnected.

Thus, the present invention is based on the insight that the photovoltaic system present a configuration that admit different modes of operation, such that the instantaneous best mode of operation may be used in order to get a less variable output voltage from the photovoltaic system, even at a location having a variable degree of instantaneous irradiation as well as during the night, or may be used in order to get an output power which corresponds to the instantaneous need.

The photovoltaic system may comprise at least two photovoltaic units connected in series, the first output terminal of the first photovoltaic unit being connected to the second input terminal of the second photovoltaic unit and the second output terminal of the first photovoltaic unit being connected to the first input terminal of the second photovoltaic unit. This means that further combinations of added output voltages may be used in order to get an as invariable output voltage of the photovoltaic system as possible.

Each voltage source may be a fixed voltage source or a regulated voltage source, and in a preferred embodiment of the present invention, the voltage source comprises at least two batteries, which are individually connectable in series with the first route and with each other. This means that the added voltage from each voltage source may be added in a stepwise manner in order to get an as invariable output voltage of the photovoltaic system as possible.

According to a preferred embodiment, at least one voltage adding arrangement comprises a charger device connected to the voltage source of the first route, the charger device comprising a first input terminal and a second input terminal, at least one of which being connected to a charger switch. Thereto, it is preferred that the at least one voltage adding arrangement is the first voltage adding arrangement and the charger device is constituted by a DC/DC converter, the first input terminal of which is connected, directly or indirectly, to the input terminal of the second photovoltaic source and the second input terminal of which is connected, directly or indirectly, to the output terminal of the second photovoltaic source. Thereby, the charger uses the output voltage from the photovoltaic source to charge the voltage source, and thereby the photovoltaic system is self supporting with regards to the occasional need of added voltage from the voltage adding arrangements.

According to another preferred embodiment, the regulated voltage source of the first voltage adding arrangement comprises a bidirectional DC/DC converter and a voltage source, which is connected to a first input terminal and a second input terminal of the bidirectional DC/DC converter, a first output terminal of the bidirectional DC/DC converter being connected to the first input terminal of the first voltage adding arrangement and a second output terminal of the bidirectional DC/DC converter being connected to the first route at the opposite side of the route switch than the output terminal of the first voltage adding arrangement and being connected by means of a charger switch, direct or indirect, to the output terminal of the second photovoltaic source. Thereby the quantity of added voltage from each voltage adding arrangement to the photovoltaic system is regulateable, which result in that the quantity of the added voltage in theory ranges from 0% to 100% of the maximum voltage level of the voltage source, or even higher than 100% if the regulator is of a suitable boost converter type.

### Further elucidation of Prior art

FR-A-2.335.081 discloses a photovoltaic system for the recharging of an accumulator, which photovoltaic system has a voltage output that is essentially uninfluenced by varying irradiation. The photovoltaic system of FR-A-2.335.081 comprises one photovoltaic source and one capacitor circuit arrangement, the latter being comparable with one of the voltage adding arrangements of the inventor. According to FR-A-2.335.081 the photovoltaic source and the capacitor circuit arrangement can be connected either in parallel or in series with each other in order to supply an appropriate output voltage to the accumulator independently of the instantaneous irradiation.

### Brief description of the drawings

A more complete understanding of the abovementioned and other features and advantages of the present invention will be apparent from the other dependent claims as well as from the following detailed description of preferred embodiments in conjunction with the appended drawings, wherein:
- Fig. 1: is a schematic illustration of a first embodiment of the inventive photovoltaic system,
- Fig. 2: is a schematic illustration of a regulated voltage source,
- Fig. 3: is a schematic illustration of a second embodiment of the inventive photovoltaic system,
- Fig. 4: is a schematic illustration of a third embodiment of the inventive photovoltaic system,
- Fig. 5: is a schematic illustration of a fourth embodiment of the inventive photovoltaic system,
- Fig. 6: is a schematic illustration of two photovoltaic units, according to the first embodiment of the inventive photovoltaic system, connected in series with each other according to a first way of series connec- tion,
- Fig. 7: is a schematic illustration of two photovoltaic units, according to the first embodiment of the inventive photovoltaic system, connected in series with each other according to a second way of series connection,
- Fig. 8: is a schematic illustration of two photovoltaic units, according to the second embodiment of the inventive photovoltaic system, connected in series with each other according to a first way of series connection, and
- Fig. 9: is a schematic illustration of two photovoltaic units, according to the second embodiment of the inventive photovoltaic system, connected in series with each other according to a second way of series connection.

### Detailed description of preferred embodiments of the invention

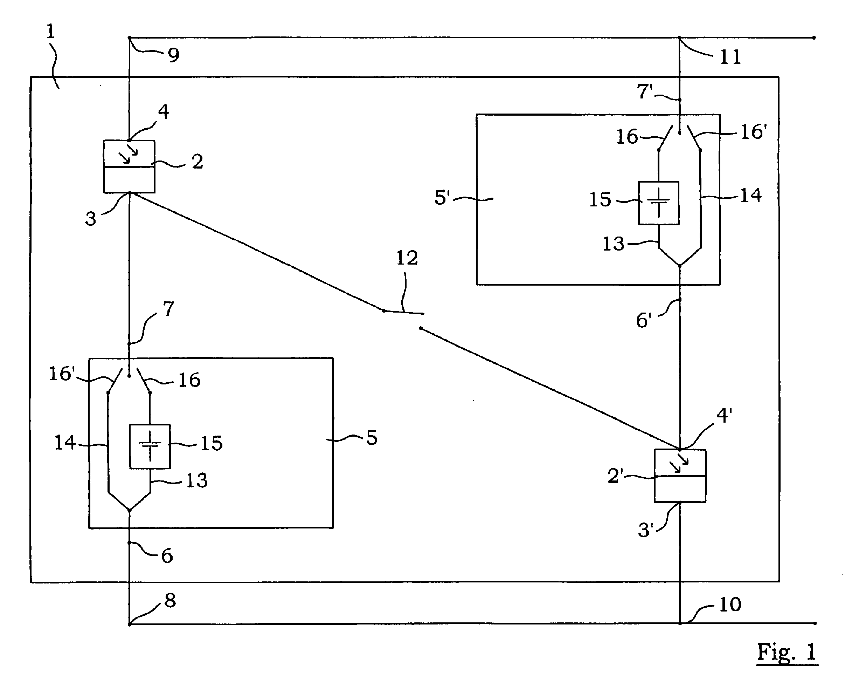

Reference is made to figure 1 which discloses a first embodiment of the present invention, however the description referred to figure 1 also holds for all other embodiments within the scope of the conceptual idea of the present invention.

A photovoltaic system, also known as a solar panel system, comprises according to the invention at least one photovoltaic unit 1 comprising two photovoltaic sources 2, 2'. The smallest structural part of a photovoltaic source 2 is a photovoltaic cell consisting of a light absorbing material which is connected to an external circuit. A number of photovoltaic cells, conventionally connected in series, constitute a photovoltaic module, which may be used singly or a plurality of them may be connected in series, in parallel or in any combination thereof, into photovoltaic panels. Thus, a photovoltaic source 2, 2' having an input terminal 3, 3' and an output terminal 4, 4' according to the invention preferably comprises a photovoltaic module or a plurality of photovoltaic modules. Each photovoltaic source 2 is designed to generate an output power at a certain current and a voltage under standard illumination/irradiation present at the location at which the specific photovoltaic system will operate. However, the photovoltaic source 2 is directly dependent on the instantaneous irradiation from the sun, which occasionally may be more or less blocked by clouds which results in that the output voltage of the photovoltaic system will vary over time. In order to overcome this problem the present invention also comprises two voltage adding arrangement 5, 5'. A first voltage adding arrangement 5 connected in series with the first photovoltaic source 2, and a second voltage adding arrangement 5' connected in series with the second photovoltaic source 2'. Each voltage adding arrangement 5, 5' comprises a first input terminal 6, 6' and an output terminal 7, 7'.

The first input terminal 6 of the first voltage adding arrangement 5 is connected to a first input terminal 8 of the photovoltaic unit 1, and the output terminal 7 of the first voltage adding arrangement 5 is connected to the input terminal 3 of the first photovoltaic source 2, the output terminal 4 of the first photovoltaic source 2 being connected to a first output terminal 9 of the photovoltaic unit 1. The input terminal 3' of the second photovoltaic source 2' is connected to a second input terminal 10 of the photovoltaic unit 1, and the output terminal 4' of the second photovoltaic source 2' is connected to the first input terminal 6' of the second voltage adding arrangement 5', the output terminal 7' of the second voltage adding arrangement 5' being connected to a second output terminal 11 of the photovoltaic unit 1. In addition, a switch 12 is arranged between the input terminal 3 of the first photovoltaic source 2 and the output terminal 4' of the second photovoltaic source 2'. Thus, in the figures the first photovoltaic source 2 is located downstream the first voltage adding arrangement 5, and the second photovoltaic source 2' is located upstream the second voltage adding arrangement 5'. However, it could be the other way around as long as one of the photovoltaic sources 2, 2' is located upstream the corresponding voltage adding arrangement 5, 5' and one of the photovoltaic sources 2, 2' is located downstream the corresponding voltage adding arrangement 5, 5'.

According to the invention the input terminals 8, 10 of the photovoltaic unit 1 constituting the external interface of the photovoltaic system are interconnected, and the output terminals 9, 11 of the photovoltaic unit 1 constituting the external interface of the photovoltaic system are interconnected. The photovoltaic system is arranged to be connected to a grid, power mains, or the like (not shown), directly or indirectly, in order to supply the output power of the photovoltaic system to a user.

Each voltage adding arrangement 5, 5' comprises a first route 13 and a second route 14 extending between the first input terminal 6, 6' and the output terminal 7, 7' of the voltage adding arrangement 5, 5'. The first route 13 comprises a voltage source, generally designated 15, and the second route 14 constitutes a voltage source bypass, the first route 13 and the second route 14 being separately activateable. Preferably, the first route 13 and the second route 14 comprises separate route switches 16, 16', but it should be pointed out that only one of the first route 13 and the second route 14 shall be active at a time, in order not to short circuit the voltage source 15. Thus, only one of the first route 13 and the second route 14 may be active at the same time, or both the first route 13 and the second route 14 may be inactive at the same time.

The photovoltaic system has several modes of operation, the most obvious of which being disclosed hereinafter.
- In a first mode of operation only one of the first photovoltaic source 2 and the second photovoltaic source 2' is active, e.g. the first route 13 and the second route 14 of the second voltage adding arrangement 5' are inactive, the switch 12 is opened and the second route 14 of the first voltage adding arrangement 5 is active.
- In a second mode of operation the first photovoltaic source 2 and the second photovoltaic source 2' are active and connected in parallel with each other, e.g. the second route 14 of both the first voltage adding arrangement 2 and the second voltage adding arrangement 2' are active, and the switch 12 is open.
- In a third mode of operation the first photovoltaic source 2 and the second photovoltaic source 2' are active and connected in series with each other, e.g. the first route 13 and the second route 14 of both the first voltage adding arrangement 2 and the second voltage adding arrangement 2' are inactive, and the switch 12 is closed.
- In a fourth mode of operation the first photovoltaic source 2 and the first voltage adding arrangement 5 or the second photovoltaic source 2' and the second voltage adding arrangement 5' are active, e.g. the first route 13 and the second route 14 of the second voltage adding arrangement 5' are inactive, the switch 12 is opened and the first route 13 of the first voltage adding arrangement 5 is active.
- In a fifth mode of operation the first photovoltaic source 2 and the second photovoltaic source 2' are active and connected in parallel with each other, and at least one of the first route 13 of the first voltage adding arrangement 5 and the first route 13 of the second voltage adding arrangement 5' is active, the switch 12 being open.
- In a sixth mode of operation, e.g. when no irradiation is present, the first route 13 of the voltage adding arrangement 5 and the second voltage adding arrangement 5', respectively, are active and connected in series with each other, the switch 12 being closed.
- In a seventh mode of operation, e.g. when no irradiation is present, the first route 13 of the voltage adding arrangement 5 and the second voltage adding arrangement 5', respectively, are active and connected in parallel with each other, the switch 12 being open.

It should be pointed out that some structural losses may occur, but if photovoltaic sources and/or voltage sources are connected in series the output voltage of the photovoltaic system will in theory be the sum of the output voltages of the different sources. The photovoltaic system switches preferably between the different modes of operation when the output voltage of the photovoltaic system needs to be adjusted, e.g. to obtain an essentially constant output voltage of the photovoltaic system. The instantaneous need of output power from the photovoltaic system may also be considered. For instance, if the voltage output of a specific photovoltaic source decreases below a predetermined threshold value a voltage source may be activated, and the instantaneous need of output power from the photovoltaic system may be considered to raise or lower said threshold value.

The voltage source 15 may be a fixed voltage source, e.g. a battery, a plurality of batteries, a fuel cell, or the like, or a regulated voltage source, e.g. a set of batteries, or an arrangement comprising a regulator and a fixed voltage source, or the like.

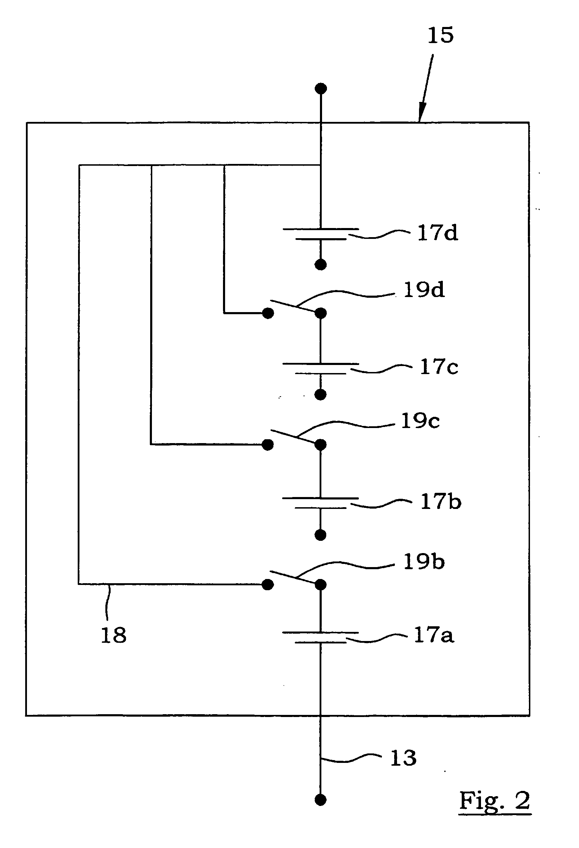

Reference is now made to figure 2, which discloses one example of a regulated voltage source 15. The disclosed regulated voltage source 15 comprises four batteries 17a, 17b, 17c, 17d, a bypass arrangement 18 of the first route 13 and three switches 19b, 19c, 19d. The default position of each switch 19b, 19c, 19d is in a disconnected position with regard to the corresponding battery 17b, 17c, 17d. The switch that at the present is the lowest switch being in the disconnected position also has to be connected to the bypass arrangement 18. However, all switches 18b, 18c, 18d, may be connected to the bypass arrangement 18 when in the disconnected positions. By connecting the switches 19b, 19c, 19d to the corresponding batteries 17b, 17c, 17d, from below and upwards, a stepwise increase of the output voltage from the regulated voltage source 15 is made, depending on the instantaneous need of added voltage to the output voltage of the photovoltaic system. Thus, the batteries 17a, 17b, 17c, 17d are individually connectable in series with the first route 13 and with each other, other structural combinations are nevertheless conceivable.

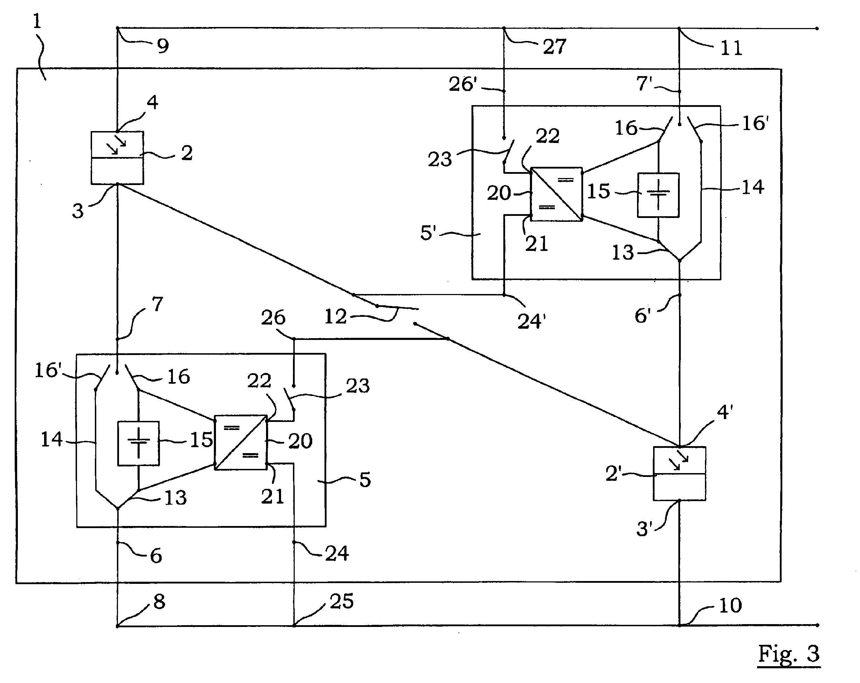

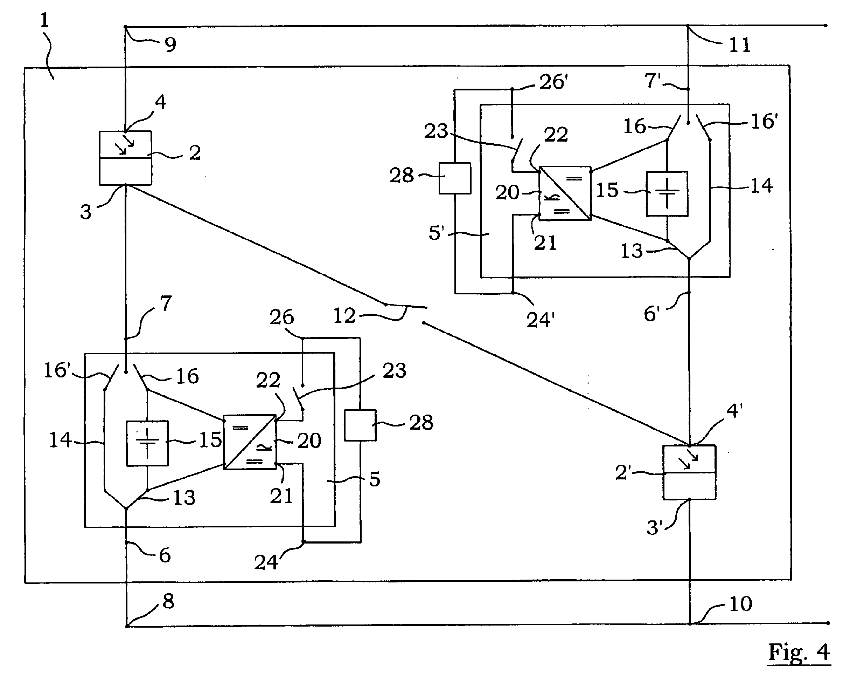

Reference is now made to figures 3 and 4, which discloses a second and a third embodiment of the present invention, respectively.

At least one of the voltage adding arrangements 5, 5' comprises preferably a charger device 20 connected to the voltage source 15 of the first route 13. The charger device 20 comprises a first input terminal 21 and a second input terminal 22, at least one of which being connected to a charger switch 23. The charger device 20 has an inactive mode when the first route 13 of the voltage adding arrangement 5, 5' is active and/or the charger switch 23 is open, and a charging mode when the first route 13 of the voltage adding arrangement 5, 5' is inactive and the charger switch 23 is closed. The use of a charging device 20 implies that the voltage source 15 is rechargeable. The voltage source 15 may as a basis only be charged when there is no voltage output therefrom. However, if the voltage source 15 comprises a set of batteries the, at the present, unused batteries may be charged even if there is a voltage output from the voltage source 15. Thus, when the photovoltaic system is in a mode of operation in which the first route 13, connected to a specific charger device 20, is inactive said specific charger device 20 may be in either the inactive mode or the charging mode, and when the photovoltaic system is in a mode of operation in which first route 13, connected to a specific charger device 20, is active said specific charging device 20 must be in the inactive mode.

Reference is now made to figure 3 and to the first voltage adding arrangement 5, however the analogous holds for the second voltage adding arrangement 5'. The charger device is constituted by a DC/DC converter 20, or the like, the first input terminal 21 of which is connected to a second input terminal 24 of the first voltage adding arrangement 5, which second input terminal 24 is connected to a third input terminal 25 of the photovoltaic unit 1, which third input terminal 25 of the photovoltaic unit 1 is connected to the input terminal 3' of the second photovoltaic source 2'. The second input terminal 22 of the DC/DC converter 20 is connected to a third input terminal 26 of the first voltage adding arrangement 5, which third input terminal 26 is connected to the output terminal 4' of the second photovoltaic source 2'. It should be pointed out that in this embodiment the first input terminal 21 of the DC/DC converter 20 may be connected directly to the input terminal 3' of the second photovoltaic source 2', and the second input terminal 22 of the DC/DC converter 20 may be connected directly to the output terminal 4' of the second photovoltaic source 2'.

When the DC/DC converter 20 is in the abovementioned charging mode, the output voltage from the second photovoltaic source 2' is used to charge the voltage source 15 of the first voltage adding arrangement 5. It shall however be pointed out that the voltage source 15 of the first voltage adding arrangement 5 in some situations is indirectly connected to the first photovoltaic source 2 as well. The DC / DC converter 20 may be put in charging mode when the capability of the voltage source 15 reaches a predetermined level and/or when there is a surplus of energy from the second photovoltaic source 2' with regards to the required output voltage of the photovoltaic system. For the second voltage adding arrangement 5', the first input terminal 21 of the charging device 20 is connected, directly or indirectly via the second input terminal 24' of the second voltage adding arrangement 5', to the input terminal 3 of the first photovoltaic source 2, and the second input terminal 22 of the charging device 20 is in the shown embodiment connected via a second output terminal 26' of the second voltage adding arrangement 5' and via a third output terminal 27 of the photovoltaic unit 1 to the output terminal 4 of the first photovoltaic source 2. However, the second input terminal 22 of the charging device 20 may be connected directly to the output terminal 4 of the first voltage adding arrangement 2.

Reference is now made to figure 4 and to the first voltage adding arrangement 5, however the analogous holds for the second voltage adding arrangement 5'. The charger device is constituted by a AC/DC converter or a DC/DC converter 20, the first input terminal 21 of which is connected to the second input terminal 24 of the first voltage adding arrangement 5. The second input terminal 22 of the AC/DC converter or the DC/DC converter 20 is connected to the third input terminal 26 of the first voltage adding arrangement 5. Said second input terminal 24 and third input terminal 26 of the first voltage adding arrangement 5 is connectable to an external power source 28, e.g. a grid, power mains, a motor, a generator, or the like. If the external power source 28 is a AC power source the charging device 20 shall be constituted by a AC/DC converter 20, or the like, and if the external power source 28 is a DC power source the charging device shall be constituted by a DC/DC converter 20, or the like. When the AC/DC converter or the DC/DC converter 20 is in the abovementioned charging mode, the external power source 28 is used to charge the voltage source 15. The AC/DC converter or the DC/DC converter 20 may be put in charging mode when the capability of the voltage source 15 reaches a predetermined level and/or when there is no voltage output from the voltage source 15. Preferably, the charging device 20 is set in charging mode during the night, when a slower charging of the voltage source 15 is admitted and thus a smaller charging device 20 is required. It should be pointed out that a common charging device 20 may be used to charge several voltage sources.

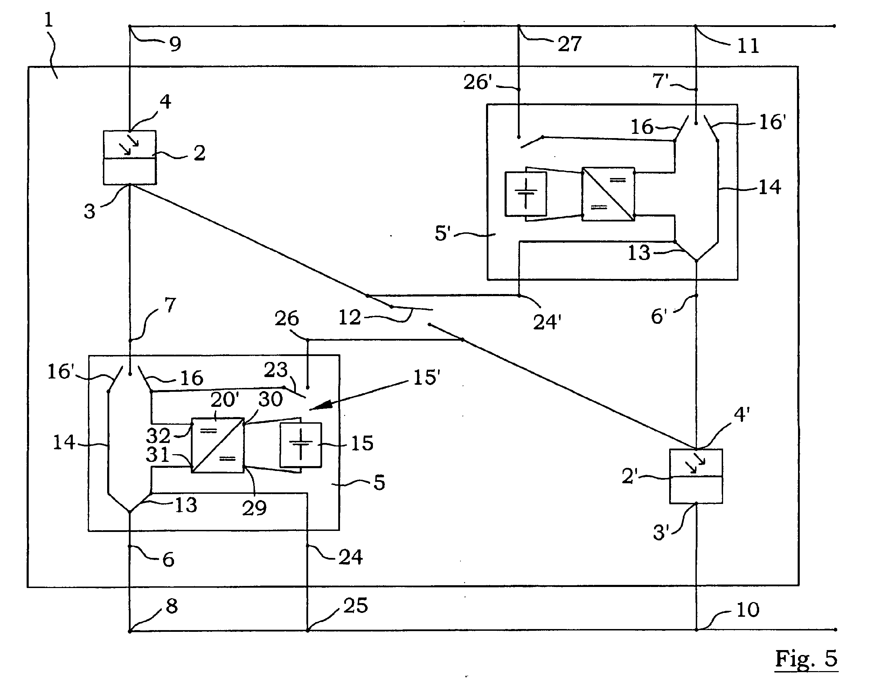

Reference is now made to figure 5, which discloses a fourth embodiment of the present invention. The reference is made to the first voltage adding arrangement 5, however the analogous holds for the second voltage adding arrangement 5'.

The first voltage adding arrangement 5 in the shown embodiment comprises a regulated voltage source 15'. Said regulated voltage source 15' comprises a voltage source 15 and a charger device 20'. The charger device 20' is constituted by a bidirectional DC/DC converter, or the like, and the voltage source 15 is preferably a fixed voltage source, e.g. a battery, or in it self a regulated voltage source, e.g. as disclosed in connection with figure 2. The voltage source 15 is connected to a first input terminal 29 and to a second input terminal 30 of the bidirectional DC/DC converter 20', a first output terminal 31 of the bidirectional DC/DC converter 20' being connected to the first input terminal 6 of the first voltage adding arrangement 5, and a second output terminal 32 of the bidirectional DC/DC converter 20' being connected to the first route 13, at the opposite side of the first route switch 16 than the output terminal 7 of the first voltage adding arrangement 5, and being connected by means of a charger switch 23 to the third input terminal 26 of the first voltage adding arrangement 5, which third input terminal 26 is connected to the output terminal 4' of the second photovoltaic source 2'. It should be pointed out that in this embodiment the first output terminal 31 of the bidirectional DC/DC converter 20' is connected, direct or indirect via the second input terminal 24 of the first voltage adding arrangement 5, to the input terminal 3' of the second photovoltaic source 2', and the second output terminal 32 of the bidirectional DC/DC converter 20' may be connected by means of the charger switch 23 directly to the output terminal 4' of the second photovoltaic source 2'.

The bidirectional DC/DC converter 20' has a regulator mode when the first route 13 of the first voltage adding arrangement 5 is active and the charger switch 23 is open, and a charging mode when the first route 13 of the first voltage adding arrangement 5 is inactive and the charger switch 23 is closed. When the bidirectional DC/DC converter 20' is in the regulator mode, the output voltage from the regulated voltage source 15' may in theory be everything between 0% and 100% of the capacity of the voltage source 15, or even higher than 100% if the regulator is of a suitable boost converter type, some structural losses may nevertheless occur. Thus, when the photovoltaic system is in a mode of operation in which the first route 13, connected to a specific bidirectional DC/DC converter 20', is inactive said specific bidirectional DC/DC converter 20' may be in either the inactive mode or the charging mode, and when the photovoltaic system is in a mode of operation in which first route 13, connected to a specific bidirectional DC / DC converter 20', is active said specific bidirectional DC/DC converter 20' must be in the regulator mode. The bidirectional DC/DC converter 20' may be put in charging mode when the capacity of the voltage source 15 reaches a predetermined level and/or when there is a surplus of energy from the second photovoltaic source 2' with regards to the required output voltage of the photovoltaic system.

As an alternative to the embodiment according to figure 5, the bidirectional DC/DC converter 20' could be exchanged by a device only capable of regulating the output voltage of the voltage source 15. Then the second output terminal 32 of that device should not be connected to the third input terminal 26 of the first voltage adding arrangement 5. In addition, a separate charging device, e.g. as disclosed in connection with the second and third embodiments according to figures 3 and 4, respectively, could be used. That is, such an alternative is then constituted by said second or third embodiment of the present invention having a regulated voltage source with a continuously variable output voltage.

It should be pointed out that the voltage adding arrangements 5, 5' according to the first, second, third and fourth embodiments of the present invention may be used separately as well as in different combinations in each photovoltaic unit 1.

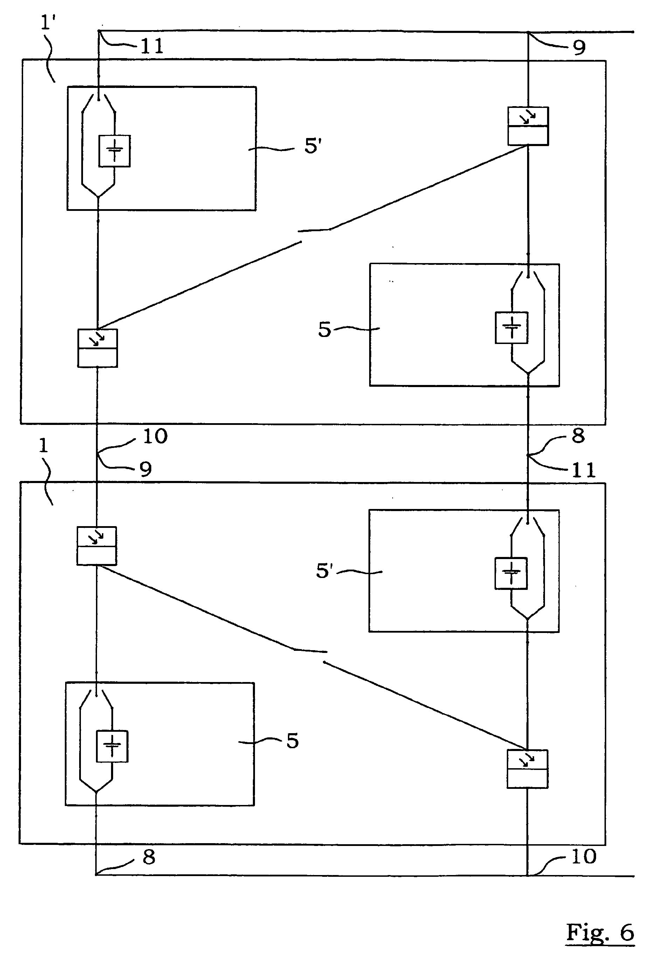

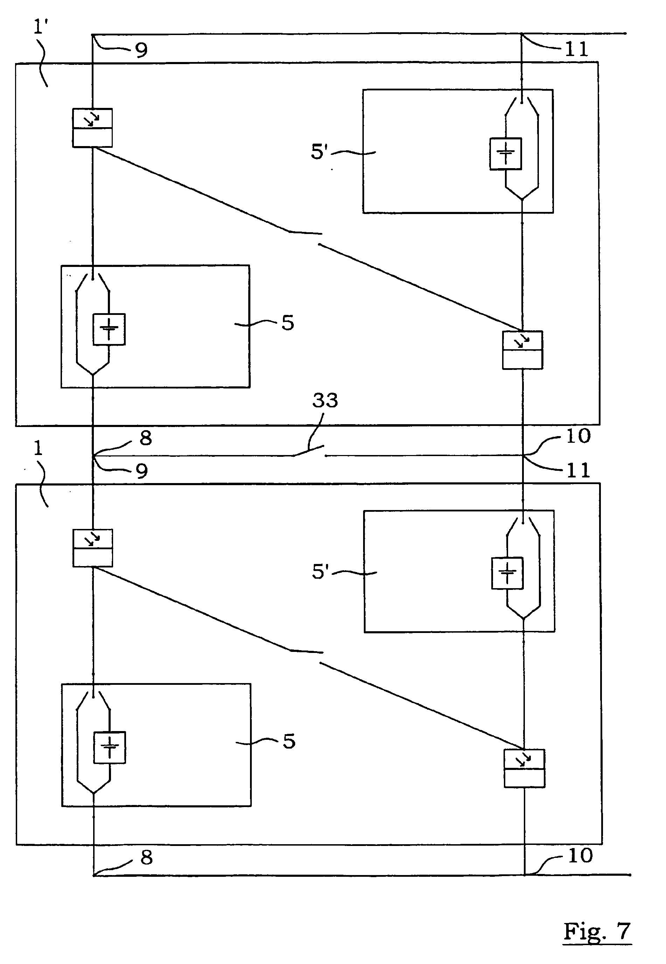

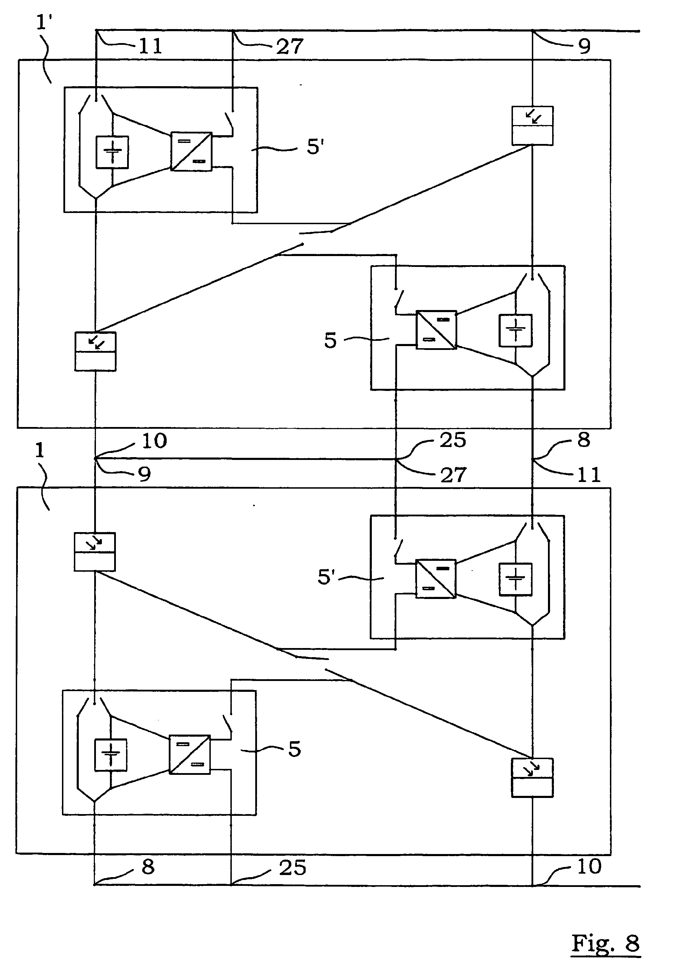

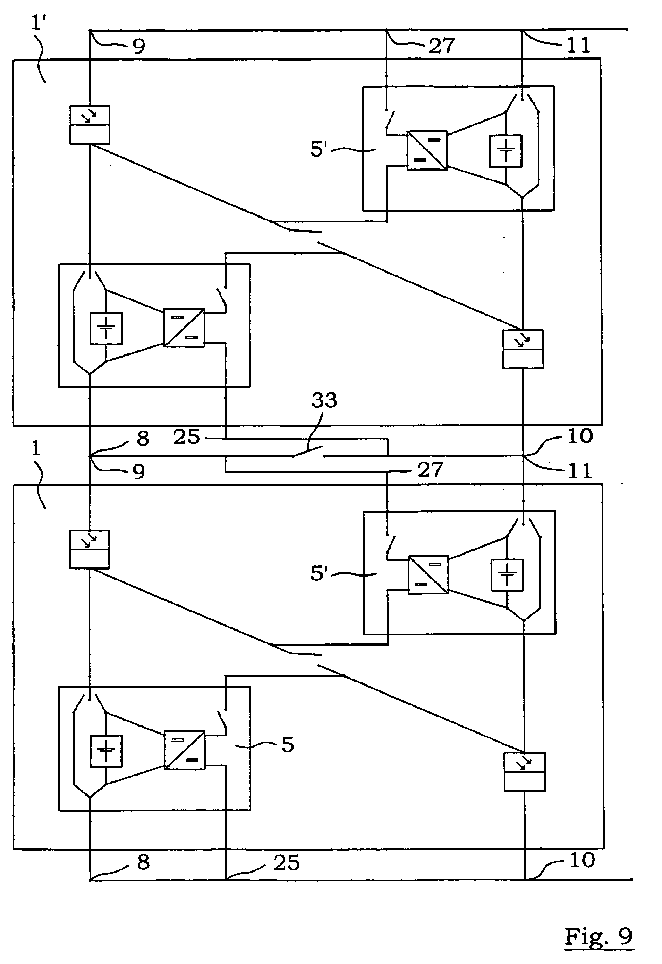

Reference is now made to figures 6-9, each disclosing an example of a photovoltaic system comprising two photovoltaic units 1, 1' connected in series. The embodiments disclosed in figures 6 and 7 comprises voltage adding arrangements 5, 5' according to the first embodiment of the present invention, and the embodiments disclosed in figures 8 and 9 comprises voltage adding arrangements 5, 5' according to the second embodiment of the present invention. However, said photovoltaic units 1, 1' may comprise the same or different voltage adding arrangements 5, 5' according to the first, second, third and fourth embodiments of the present invention. The different modes of operation related to each photovoltaic unit are combinable in all conceivable ways. In addition, everything that holds for a separate photovoltaic unit 1 as described above, also holds for each photovoltaic unit 1, 1' when connected in series with each other.

In figures 6 and 7 the input terminals 8, 10 of the first photovoltaic unit 1 constitutes the external interface of the photovoltaic system and are thus interconnected, and the output terminals 9, 11 of the second photovoltaic unit 1' constitutes the external interface of the photovoltaic system and are thus interconnected.

According to the embodiment disclosed in figure 6 the first output terminal 9 of the first photovoltaic unit 1 is connected to the second input terminal 10 of the second photovoltaic unit 1' and the second output terminal 11 of the first photovoltaic unit 1 is connected to the first input terminal 8 of the second photovoltaic unit 1'.

According to the embodiment disclosed in figure 7 the first output terminal 9 of the first photovoltaic unit 1 is connected to the first input terminal 8 of the second photovoltaic unit 1' and the second output terminal 11 of the first photovoltaic unit 1 is connected to the second input terminal 10 of the second photovoltaic unit 1'. In addition a switch 33 is arranged between the first output terminal 9 of the first photovoltaic unit 1 and the second output terminal 11 of the first photovoltaic unit 1.

In figures 8 and 9 the input terminals 8, 10, 25 of the first photovoltaic unit 1 constitutes the external interface of the photovoltaic system and are thus interconnected, and the output terminals 9, 11, 27 of the second photovoltaic unit 1' constitutes the external interface of the photovoltaic system and are thus interconnected.

According to the embodiment disclosed in figure 8 the first output terminal 9 of the first photovoltaic unit 1 is connected to the second input terminal 10 of the second photovoltaic unit 1' and the second output terminal 11 of the first photovoltaic unit 1 is connected to the first input terminal 8 of the second photovoltaic unit 1', and the third output terminal 27 of the first photovoltaic unit 1 is connected to the first output terminal 9 of the first photovoltaic unit 1 and the third input terminal 25 of the second photovoltaic unit 1' is connected to the second input terminal 10 of the second photovoltaic unit 1'.

According to the embodiment disclosed in figure 9 the first output terminal 9 of the first photovoltaic unit 1 is connected to the first input terminal 8 of the second photovoltaic unit 1' and the second output terminal 11 of the first photovoltaic unit 1 is connected to the second input terminal 10 of the second photovoltaic unit 1'. In addition a switch 33 is arranged between the first output terminal 9 of the first photovoltaic unit 1 and the second output terminal 11 of the first photovoltaic unit 1. Thereto, the third output terminal 27 of the first photovoltaic unit 1 is connected to the first output terminal 9 of the first photovoltaic unit 1 and the third input terminal 25 of the second photovoltaic unit 1' is connected to the second input terminal 10 of the second photovoltaic unit 1'.

Reference is now made to an undisclosed example of a photovoltaic system comprising two photovoltaic units 1, 1' connected in parallel. Said photovoltaic units 1, 1' may comprise the same or different voltage adding arrangements 5, 5' according to the first, second, third and fourth embodiments of the present invention. The different modes of operation related to each photovoltaic unit are combinable in all conceivable ways. In addition, everything that holds for a separate photovoltaic unit 1 as described above, also holds for each photovoltaic unit 1, 1' when connected in series with each other.

All output terminals of the first photovoltaic unit 1 and of the second photovoltaic unit 1' constitutes the external interface of the photovoltaic system and are thus interconnected, and all input terminals of the first photovoltaic unit 1 and of the second photovoltaic unit 1' constitutes the external interface of the photovoltaic system and are thus interconnected.

### Feasible modifications of the Invention

The invention is not limited only to the embodiments described above and shown in the drawings, which primarily have an illustrative and exemplifying purpose. This patent application is intended to cover all adjustments and variants of the preferred embodiments described herein, thus the present invention is defined by the wording of the appended claims and the equivalents thereof. Thus, the photovoltaic system may be modified in all kinds of ways within the scope of the appended claims.

It shall be pointed out that the words or expressions "voltage adding arrangement" and "photovoltaic unit" not necessarily have to be delimited by boxes as in the shown embodiments. Furthermore, all input and output terminals disclosed in this document do not need to be physical entities.

It shall also be pointed out that all switches preferably is controlled by a control system (not shown) which for instance may supervise the instantaneous capacity of the voltage source, the instantaneous output voltage from the photovoltaic source, the instantaneous irradiation, etc.

It shall also be pointed out that the capacity of the voltage sources may be a part of, equal to, or more than, the capacity of the photovoltaic sources, all depending on the specific application. If the photovoltaic system is expected to have an output voltage during long cloudy periods or during the nights, the capacity of the voltage sources should preferably be equal to or more than the capacity of the photovoltaic sources. If the voltage sources is expected only to support the photovoltaic sources during short periods of decreased irradiation, the capacity of the voltage sources could for instance be about 10-40% of the capacity of the photovoltaic sources.

It shall be pointed out that all information about/ concerning terms such as above, below, under, upper, first, second, third, etc., shall be interpreted/ read having the equipment oriented according to the figures, having the drawings oriented such that the references can be properly read. Thus, such terms only indicates mutual relations in the shown embodiments, which relations may be changed if the inventive equipment is provided with another structure/design.

It shall also be pointed out that even thus it is not explicitly stated that features from a specific embodiment may be combined with features from another embodiment, the combination shall be considered obvious, if the combination is possible. For instance, the charging arrangement according to the second embodiment of the present invention may be supplemented with the charging arrangement according to the third embodiment of the present invention, in order to admit charging by night if needed.

It should also be pointed out that other photovoltaic sources and/or voltage adding arrangements may be connected to the inventive photovoltaic system in parallel, in series, or in any combination thereof.

Throughout this specification and the claims which follows, unless the context requires otherwise, the word "comprises", and variations such as "comprises" or "comprising", will be understood to imply the inclusion of a stated integer or steps or group of integers or steps but not the exclusion of any other integer or step or group of integers or steps.

## Claims

1. A photovoltaic system for generating an output voltage which is essentially uninfluenced by varying irradiation, the photovoltaic system comprising at least one photovoltaic unit (1, 1') comprising two photovoltaic sources (2, 2'), each comprising a negative terminal (3, 3') and a positive terminal (4, 4'), wherein
- the photovoltaic unit (1, 1') comprises two voltage adding arrangements (5, 5'), each comprising a first negative terminal (6, 6') and a positive terminal (7, 7'),
- a first route (13) comprising a voltage source (15) and a second route (14) constituting a voltage source bypass extend between said first negative terminal (6, 6') and said positive terminal (7, 7') of each voltage adding arrangement (5, 5'), said first and second routes (13, 14) being separately activateable,
- the first negative terminal (6) of the first voltage adding arrangement (5) being connected to a first input terminal (8) of the photovoltaic unit (1, 1'), and the positive terminal (7) of the first voltage adding arrangement (5) being connected to the negative terminal (3) of the first photovoltaic source (2), and the positive terminal (4) of the first photovoltaic source (2) being connected to a first output terminal (9) of the photovoltaic unit (1, 1'),
- the negative terminal (3') of the second photovoltaic source (2') being connected to a second input terminal (10) of the photovoltaic unit (1, 1'), and the positive terminal (4') of the second photovoltaic source (2') being connected to the first negative terminal (6') of the second voltage adding arrangement (5'), and the positive terminal (7') of the second voltage adding arrangement (5') being connected to a second output terminal (11) of the photovoltaic unit (1, 1'),
- a switch (12) is arranged between the negative terminal (3) of the first photovoltaic source (2) and the positive terminal (4') of the second photovoltaic source (2'),
- in addition the input terminals (8, 10) of the photovoltaic unit (1, 1') constituting the external interface of the photovoltaic system are interconnected and the output terminals (9, 11) of the photovoltaic unit (1, 1') constituting the external interface of the photovoltaic system are interconnected.

2. The photovoltaic system according to claim 1, wherein said photovoltaic system comprises at least two photovoltaic units (1, 1') connected in series, the first output terminal (9) of the first photovoltaic unit (1) being connected to the second input terminal (10) of the second photovoltaic unit (1') and the second output terminal (11) of the first photovoltaic unit (1) being connected to the first input terminal (8) of the second photovoltaic unit (1').

3. The photovoltaic system according to claim 1, wherein said photovoltaic system comprises at least two photovoltaic units (1, 1') connected in series, the first output terminal (9) of the first photovoltaic unit (1) being connected to the first input terminal (8) of the second photovoltaic unit (1') and the second output terminal (11) of the first photovoltaic unit (1) being connected to the second input terminal (10) of the second photovoltaic unit (1'), in addition a switch (33) is arranged between the first output terminal (9) of the first photovoltaic unit (1) and the second output terminal (11) of the first photovoltaic unit (1).

4. The photovoltaic system according to claim 1, wherein said photovoltaic system comprises at least two photovoltaic units (1, 1') connected in parallel, the first output terminal (9) and the second output terminal (11) of the first photovoltaic unit (1) being connected to the first output terminal (9) and the second output terminal (11) of the second photovoltaic unit (1'), and the first input terminal (8) and the second input terminal (10) of the first photovoltaic unit (1) being connected to the first input terminal (8) and the second input terminal (10) of the second photovoltaic unit (1').

5. The photovoltaic system according to any of the claims 1 to 4, wherein each photovoltaic source (2, 2') is constituted by a photovoltaic module or a plurality of photovoltaic modules.

6. The photovoltaic system according to any of the claims 1 to 5, wherein the first route (13) and the second route (14) of each voltage adding arrangement (5, 5') comprises a first route switch (16) and a second route switch (16'), respectively.

7. The photovoltaic system according to any preceding claim, wherein each voltage source (15) is constituted by a fixed voltage source or a regulated voltage source.

8. The photovoltaic system according to any preceding claim, wherein each voltage source (15) is constituted by at least one battery.

9. The photovoltaic system according to any preceding claim, wherein at least one voltage source (15) comprises at least two batteries (17a, 17b, 17c, 17d), which are individually connectable in series with the first route (13) and with each other.

10. The photovoltaic system according to any preceding claim, wherein at least one voltage adding arrangement (5, 5') comprises a charger device (20) connected to the voltage source (15) of the first route (13), the charger device (20) comprising a first input terminal (21) and a second input terminal (22), at least one of which being connected to a charger switch (23).

11. The photovoltaic system according to claim 10, wherein the charger device (20) has an inactive mode when the charger switch (23) is open, and a charging mode when the first route (13) of the voltage adding arrangement (5, 5') is inactive and the charger switch (23) is closed.

12. The photovoltaic system according to claim 10 or 11, wherein the at least one voltage adding arrangement is the first voltage adding arrangement (5) and the charger device (20) is constituted by a DC/DC converter, the first input terminal (21) of which is connected, directly or indirectly, to the negative terminal (3') of the second photovoltaic source (2'), and the second input terminal (22) of which is connected, directly or indirectly, to the positive terminal (4') of the second photovoltaic source (2').

13. The photovoltaic system according to claim 10 or 11, wherein the at least one voltage adding arrangement is the first voltage adding arrangement (5) and the charger device (20) is constituted by a AC/DC converter or a DC/DC converter, the first input terminal (21) of which is connected to a second input terminal (24) of the first voltage adding arrangement (5), and the second input terminal (22) of which is connected to a third input terminal (26) of the first voltage adding arrangement (5), said second and third input terminals (24, 26) of the first voltage adding arrangement (5) being connectable to an external power source (28).

14. The photovoltaic system according to any of claims 1-9, wherein the first voltage adding arrangement (5) comprises a regulated voltage source (15'), which comprises a voltage source (15) and a charger device (20'), which charger device (20') is constituted by a bidirectional DC/DC converter, the voltage source (15) being connected to a first input terminal (29) and a second input terminal (30) of the bidirectional DC/DC converter (20'), a first output terminal (31) of the bidirectional DC/DC converter (20') being connected to the first input terminal (6) of the first voltage adding arrangement (5) and direct or indirect to the negative terminal (3') of the second photovoltaic source (2'), and a second output terminal (32) of the bidirectional DC/DC converter (20') being connected to the first route (13) at the opposite side of the first route switch (16) than the positive terminal (7) of the first voltage adding arrangement (5) and being connected by means of a charger switch (23), direct or indirect, to the positive terminal (4') of the second photovoltaic source (2').

15. The photovoltaic system according to claim 14, wherein the bidirectional DC/DC converter (20') has a regulator mode when the first route (13) of the first voltage adding arrangement (5) is active and the charger switch (23) is open, and a charging mode when the first route (13) of the first voltage adding arrangement (5) is inactive and the charger switch (23) is closed.

## Patentansprüche

1. Photovoltaisches System zum Erzeugen einer Ausgangsspannung, welche im Wesentlichen unbeeinflusst von veränderlicher Strahlung ist, wobei das photovoltaische System mindestens eine photovoltaische Einheit (1, 1') umfasst, die zwei photovoltaische Quellen (2, 2') umfasst, die jeweils einen negativen Anschluss (3, 3') und einen positiven Anschluss (4, 4') umfassen, wobei
- die photovoltaische Einheit (1, 1') zwei Spannungsadditionsanordnungen (5, 5') umfasst, die jeweils einen ersten negativen Anschluss (6, 6') und einen positiven Anschluss (7, 7') umfassen,
- ein erster Leitweg (13), der eine Spannungsquelle (15) umfasst, und ein zweiter Leitweg (14), der eine Spannungsquellenüberbrückung bildet, sich zwischen dem ersten negativen Anschluss (6, 6') und dem positiven Anschluss (7, 7') jeder Spannungsadditionsanordnung (5, 5') erstrecken, wobei die ersten und zweiten Leitwege (13, 14) separat aktivierbar sind,
- der erste negative Anschluss (6) der ersten Spannungsadditionsanordnung (5) mit einem ersten Eingangsanschluss (8) der photovoltaischen Einheit (1, 1') verbunden ist, und der positive Anschluss (7) der ersten Spannungsadditionsanordnung (5) mit dem negativen Anschluß (3) der ersten photovoltaischen Quelle (2) verbunden ist, und der positive Anschluss (4) der ersten photovoltaischen Quelle (2) mit einem ersten Ausgangsanschluss (9) der photovoltaischen Einheit (1, 1') verbunden ist,
- der negative Anschluss (3') der zweiten photovoltaischen Quelle (2') mit einem zweiten Eingangsanschluss (10) der photovoltaischen Einheit (1, 1') verbunden ist, und der positive Anschluss (4') der zweiten photovoltaischen Quelle (2') mit dem ersten negativen Anschluss (6') der zweiten Spannungsadditionsanordnung (5') verbunden ist, und der positive Anschluss (7') der zweiten Spannungsadditionsanordnung (5') mit einem zweiten Ausgangsanschtuss (11) der photovoltaischen Einheit (1, 1') verbunden ist,
- ein Schalter (12) zwischen dem negativen Anschluss (3) der ersten photovoltaischen Quelle (2) und dem positiven Anschluss (4') der zweiten photovoltaischen Quelle (2') angeordnet ist,
- außerdem die Eingangsanschlüsse (8, 10) der photovoltaischen Einheit (1, 1'), welche die externe Schnittstelle des photovoltaischen Systems bilden, miteinander verbunden sind, und die Ausgangsanschlüsse (9, 11) der photovoltaischen Einheit (1, 1'), welche die externe Schnittstelle des photovoltaischen Systems bilden, miteinander verbunden sind.

2. Photovoltaisches System nach Anspruch 1, wobei das photovoltaische System mindestens zwei photovoltaische Einheiten (1, 1') umfasst, die in Reihe geschaltet sind, wobei der erste Ausgangsanschluss (9) der ersten photovoltaischen Einheit (1) mit dem zweiten Eingangsanschluss (10) der zweiten photovoltaischen, Einheit (1') verbunden ist, und der zweite Ausgangsanschluss (11) der ersten photovoltaischen Einheit (1) mit dem ersten Eingangsanschluss (8) der zweiten photovoltaischen Einheit (1') verbunden ist.

3. Photovoltaisches System nach Anspruch 1, wobei das photovoltaische System mindestens zwei photovoltaische Einheiten (1, 1') umfasst, die in Reihe geschaltet sind, wobei der erste Ausgangsatzschluss (9) der ersten photovoltaischen Einheit (1) mit dem ersten Eingangsanschluss (8) der zweiten photovoltaischen Einheit (1') verbunden ist, und der zweite Ausgangsanschluss (11) der ersten photovoltaischen Einheit (1) mit dem zweiten Eingangsanschluss (10) der zweiten photovoltaischen Einheit (1') verbunden ist, und außerdem ein Schalter (33) zwischen dem ersten Ausgangsanschluss (9) der ersten photovoltaischen Einheit (1) und dem zweiten Ausgangsanschluss (11) der ersten photovoltaischen Einheit (1) angeordnet ist.

4. Photovoltaisches System nach Anspruch 1, wobei das photovoltaische System mindestens zwei photovoltaische Einheiten (1, 1') umfasst, die parallel geschaltet sind, wobei der erste Ausgangsanschluss (9) und der zweite Ausgangsanschluss (11) der ersten photovoltaischen Einheit (1) mit dem ersten Ausgangsanschluss (9) und dem zweiten Ausgangsanschluss (11) der zweiten photovoltaischen Einheit (1') verbunden sind, und der erste Eingangsanschluss (8) und der zweite Eingangsanschluss (10) der ersten photovoltaischen Einheit (1) mit dem ersten Eingangsanschluss (8) und dem zweiten Eingangsanschluss (10) der zweiten photovoltaischen Einheit (1') verbunden sind.

5. Photovoltaisches System nach einem der Ansprüche 1 bis 4, wobei jede photovoltaische Quelle (2, 2') durch ein photovoltaisches Modul oder durch eine Mehrzahl von photovoltaischen Modulen gebildet ist.

6. Photovoltaisches System nach einem der Ansprüche 1 bis 5, wobei der erste Leitweg (13) und der zweite Leitweg (14) jeder Spannungsadditionsanordnung (5, 5') einen ersten Leitwegschalter (16) beziehungsweise einen zweiten Leitwegschalter (16') umfassen.

7. Photovoltaisches System nach einem der vorhergehenden Ansprüche, wobei jede Spannungsquelle (15) durch eine feste Spannungsquelle oder eine geregelte Spannungsquelle gebildet ist.

8. Photovoltaisches System nach einem der vorhergehenden Anspruch, wobei jede Spannungsquelle (15) durch mindestens eine Batterie gebildet ist.

9. Photovoltaisches System nach einem der vorhergehenden Ansprüche, wobei mindestens eine Spannungsquelle (15) mindestens zwei Batterien (17a, 17b, 17c, 17d) umfasst, welche mit dem ersten Leitweg (13) und miteinander individuell in Reihe geschaltet werden können.

10. Photovoltaisches System nach einem der vorhergehenden Ansprüche, wobei mindestens eine Spannungsadditionsanordnung (5, 5') eine Ladevorrichtung (20) umfasst, die mit der Spannungsquelle (15) des ersten Leitwegs (13) verbunden ist, wobei die Ladevorrichtung (20) einen ersten Eingangsanschluss (21) und einen zweiten Eingangsanschluss (22) umfasst, von welchen mindestens einer mit einem Ladeschalter (23) verbunden ist.

11. Photovoltaisches System nach Anspruch 10, wobei die Ladevorrichtung (20) einen inaktiven Modus, wenn der Ladeschalter (23) offen ist, und einen Lademodus aufweist, wenn der erste Leitweg (13) der Spannungsadditionsanordnung (5, 5') inaktiv ist und der Ladeschalter (23) geschlossen ist.

12. Photovoltaisches System nach Anspruch 10 oder 11, wobei die mindestens eine Spannungsadditionsanordnung die erste Spannungsadditionsanordnung (5) ist, und die Ladevorrichtung (20) durch einen GS/GS-Wandler gebildet ist, dessen erster Eingangsanschluss (21) direkt oder indirekt mit dem negativen Anschluss (3') der zweiten photovoltaischen Quelle (2') verbunden ist, und dessen zweiter Eingangsanschluss (22) direkt oder indirekt mit dem positiven Anschluss (4') der zweiten photovoltaischen Quelle (2') verbunden ist.

13. Photovoltaisches System nach Anspruch 10 oder 11, wobei die mindestens eine Spannungsadditionsanordnung die erste Spannungsadditionsanordnung (5) ist, und die Ladevorrichtung (20) durch einen WS/GS-Wandler oder einen GS/GS-Wandler gebildet ist, dessen erster Eingangsanschluss (21) mit einem zweiten Eingangsanschluss (24) der ersten Sparrnungsadditionsanordnung (5) verbunden ist, und dessen zweiter Eingangsanschluss (22) mit einem dritten Eingangsanschluss (26) der ersten Spannungsadditionsanordnung (5) verbunden ist, wobei die zweiten und dritten Eingangsanschlüsse (24, 26) der ersten Spannungsadditionsanordnung (5) mit einer externen Leistungsquelle (28) verbindbar sind.

14. Photovoltaisches System nach einem der Ansprüche 1 bis 9, wobei die erste Spannungsadditionsanordnung (5) eine geregelte Spannungsquelle (15') umfasst, welche eine Spannungsquelle (15) und eine Ladevorrichtung (20') umfasst, wobei die Ladevorrichtung (20') durch einen bidirektionalen GS/GS-Wandler gebildet ist, die Spannungsquelle (15) mit einem ersten Eingangsanschluss (29) und einem zweiten Eingangsanschluss (30) des bidirektionalen GS/GS-Wandlers (20') verbunden ist, ein erster Ausgangsanschluss (31) des bidirektionalen GS/GS-Wandlers (20') mit dem ersten Eingangsanschluss (6) der ersten Spannungsadditionsanordnung (5) und direkt oder indirekt mit dem negativen Anschluss (3') der zweiten photovoltaischen Quelle (2') verbunden ist, und ein zweiter Ausgangsanschluss (32) des bidirektionalen GS/GS-Wandlers (20') mit dem ersten Leitweg (13) auf der gegenüberliegenden Seite des ersten Leitwegschalters (16) als der positive Anschluss (7) der ersten Spannungsadditionsanordnung (5) verbunden ist und mittels eines Ladeschalters (23) direkt oder indirekt mit dem positiven Anschluss (4') der zweiten photovoltaischen Quelle (2') verbunden wird.

15. Photovoltaisches System nach Anspruch 14, wobei der bidirektionale GS/GS-Wandler (20') einen Reglermodus, wenn der erste Leitweg (13) der ersten Spannungsadditionsanordnung (5) aktiv ist und der Ladeschalter (23) offen ist, und einen Lademodus aufweiset, wenn der erste Leitweg (13) der ersten Spannungsadditionsanordnung (5) inaktiv ist und der Ladeschalter (23) geschlossen ist.

## Revendications

1. Un système photovoltaïque pour la génération d'une tension de sortie qui est principalement non-influencée par la variation d'une irradiation, le système photovoltaïque comprenant au moins une unité photovoltaïque (1, 1') comprenant deux sources photovoltaïques (2, 2'), chacune comprenant une borne négative (3, 3') et une borne positive (4, 4'), où
- l'unité photovoltaïque (1, 1') comprend deux dispositions d'ajout de tension (5, 5'), chacune comprenant une première borne négative (6, 6') et une borne positive (7, 7'),
- un premier acheminement (13) comprenant une source de tension (15) et un deuxième acheminement (14) constituant une extension de la dérivation de la source de tension entre ladite première borne négative (6, 6') et ladite borne positive (7, 7') de chaque disposition d'ajout de tension (5, 5'), ledit premier et deuxième acheminements (13, 14) étant activables séparément,
- la première borne négative (6) de la première disposition d'ajout de tension (5) étant connectée à une première borne d'entrée (8) de l'unité photovoltaïque (1, 1'), et la borne positive (7) de la première disposition d'ajout de tension (5) étant connectée à la borne négative (3) de la première source photovoltaïque (2), et la borne positive (4) de la première source photovoltaïque (2) étant connectée à une première borne de sortie (9) de l'unité photovoltaïque (1, 1'),
- la borne négative (3') de la deuxième source photovoltaïques (2') étant connectée à une deuxième borne d'entrée (10) de l'unité photovoltaïque (1, 1'), et la borne positive (4') de la deuxième source photovoltaïque (2') étant connectée à la première borne négative (6') de la deuxième disposition d'ajout de tension (5'), et la borne positive (7') de la deuxième disposition d'ajout de tension (5') étant connectée à une deuxième borne de sortie (11) de l'unité photovoltaïque (1, 1'),
- un interrupteur (12) est disposé entre la borne négative (3) de la première source photovoltaïque (2) et la borne positive (4') de la deuxième source photovoltaïque (2'),
- de plus, les bornes d'entrée (8, 10) de l'unité photovoltaïque (1, 1') constituant l'interface externe du système photovoltaïque sont interconnectées et les bornes de sortie (9, 11) de l'unité photovoltaïque (1, 1') constituant l'interface externe du système photovoltaïque sont interconnectées.

2. Le système photovoltaïque selon la revendication 1, où ledit système photovoltaïque comprend au moins deux unités photovoltaïques (1, 1') connectées en série, la première borne de sortie (9) de la première unité photovoltaïque (1) étant connectée à la deuxième borne d'entrée (10) de la deuxième unité photovoltaïque (1') et la deuxième borne de sortie (11) de la première unité photovoltaïque (1) étant connectée à la première borne d'entrée (8) de la deuxième unité photovoltaïque (1').

3. Le système photovoltaïque selon la revendication 1, où ledit système photovoltaïque comprend au moins deux unités photovoltaïques (1, 1') connectées en série, la première borne de sortie (9) de la première unité photovoltaïque (1) étant connectée à la première borne d'entrée (8) de la deuxième unité photovoltaïque (1') et la deuxième borne de sortie (11) de la première unité photovoltaïque (1) étant connectée à la deuxième borne d'entrée (10) de la deuxième unité photovoltaïque (1'), de plus, un interrupteur (33) est disposé entre la première borne de sortie (9) de la première unité photovoltaïque (1) et la deuxième borne de sortie (11) de la première unité photovoltaïque (1).

4. Le système photovoltaïque selon la revendication 1, où ledit système photovoltaïque comprend au moins deux unités photovoltaïques (1,1') connectées en parallèle, la première borne de sortie (9) et la deuxième borne de sortie (11) de la première unité photovoltaïque (1) étant connectées à la première borne de sortie (9) et la deuxième borne de sortie (11) de la deuxième unité photovoltaïque (1'), et la première borne d'entrée (8) et la deuxième borne d'entrée (10) de la première unité photovoltaïque (1) étant connectées à la première borne d'entrée (8) et la deuxième borne d'entrée (10) de la deuxième unité photovoltaïque (1').

5. Le système photovoltaïque selon l'une des documentations 1 à 4, où chaque source photovoltaïque (2, 2') est constituée par un module photovoltaïque ou une pluralité de modules photovoltaïques.

6. Le système photovoltaïque selon l'une des revendications 1 à 5, où le premier acheminement (13) et le deuxième acheminement (14) de chaque disposition d'ajout de tension (5, 5') comprennent un premier interrupteur d'acheminement (16) et un deuxième interrupteur d'acheminement (16'), respectivement.

7. Le système photovoltaïque selon l'une des revendications précédentes, où chaque source de tension (15) est constituée d'une source de tension fixe ou une source de tension ajustée.

8. Le système photovoltaïque selon l'une des revendications précédentes, où chaque source de tension (15) est constituée au moins d'une batterie.

9. Le système photovoltaïque selon l'une des revendications précédentes, où au moins une source de tension (15) comprend au moins deux batteries (17a, 17b, 17c, 17d), qui sont connectables individuellement en série avec le premier acheminement (13) et l'une avec l'autre.

10. Le système photovoltaïque selon l'une des revendications précédentes, où au moins une disposition d'ajout de tension (5, 5') comprend un chargeur (20) connecté à une source de tension (15) du premier acheminement (13), le chargeur (20) comprenant une première borne d'entrée (21) et une deuxième borne d'entrée (22), dont une au moins est connectée à un interrupteur du chargeur (23).

11. Le système photovoltaïque selon la revendication 10, où le chargeur (20) a un mode inactif lorsque l'interrupteur de chargeur (23) est ouvert, et un mode de chargement lorsque le premier acheminement (13) de la disposition d'ajout de tension (5, 5') est inactif et l'interrupteur du chargeur (23) est fermé.

12. Le système photovoltaïque selon la revendication 10 ou 11, où au moins une disposition d'ajout de tension est la première disposition d'ajout de tension (5) et le chargeur (20) est constitué d'un convertisseur CC/CC, dont la première borne d'entrée (21) est connectée, directement ou indirectement, à la borne négative (3') de la deuxième source photovoltaïque (2'), et dont la deuxième borne d'entrée (22) est connectée, directement ou indirectement, à la borne positive (4') de la deuxième source photovoltaïque (2').

13. Le système photovoltaïque selon la revendication 10 ou 11, où au moins une disposition d'ajout de tension est la première disposition d'ajout de tension (5) et le chargeur (20) est constitué d'un convertisseur CA/CC ou d'un convertisseur CC/CC, dont la première borne d'entrée (21) est connectée à une deuxième borne d'entrée (24) de la première disposition d'ajout de tension (5), et dont la deuxième borne d'entrée (22) est connectée à une troisième borne d'entrée (26) de la première disposition d'ajout de tension (5), lesdites deuxième et troisième borne d'entrée (24, 26) de la première disposition de tension (5) étant connectables à une source d'alimentation extérieure (28).

14. Le système photovoltaïque selon l'une des revendications 1-9, où la première disposition d'ajout de tension (5) comprend une source de tension ajustée (15'), qui comprend une source de tension (15) et un chargeur (20'), ce chargeur (20') est constitué d'un convertisseur CC/CC bidirectionnel, la source de tension (15) étant connectée à une première borne d'entrée (29) et une deuxième borne d'entrée (30) du convertisseur CC/CC bidirectionnel (20'), une première borne de sortie (31) du convertisseur CC/CC bidirectionnel (20') étant connectée à la première borne d'entrée (6) de la première disposition d'ajout de tension (5) et directement ou indirectement à la borne négative (3') de la deuxième source photovoltaïque (2'), et une deuxième borne de sortie (32) du convertisseur CC/CC bidirectionnel (20') étant connectée au premier acheminement (13) sur le côté opposé du premier interrupteur d'acheminement (16) par rapport à la borne positive (7) de la première disposition d'ajout de tension (5) et étant connectée au moyen d'un interrupteur de chargeur (23), directement ou indirectement, à la borne positive (4') de la deuxième source photovoltaïque (2').

15. Le système photovoltaïque selon la revendication 14, où le convertisseur CC/CC bidirectionnel (20') a un mode de régulateur lorsque le premier acheminement (13) de la première disposition d'ajout de tension (5) est actif et l'interrupteur du chargeur (23) est ouvert, et une mode de chargement lorsque le premier acheminement (13) de la première disposition d'ajout de tension (5) est inactif et l'interrupteur du chargeur (23) est fermé.
